# EUROPEAN PATENT APPLICATION

(11) **EP 1 006 671 A2**
(43) Date of publication of application: **07.06.2000**
(21) Application number: 99309636.1
(22) Date of filing: 01.12.1999
(51) Int. Cl.: H04B 1/707

(54) **System and method for cordless communication using radio frequency de-spreading**

(30) Priority: 02.12.1998 US 205005
(71) Applicant: Siemens Information and Communication Products, L.L.C., Austin, TX 78728-3811 (US)
(72) Inventor: Sydon, Uwe, Round Rock, TX 78681 (US)
(74) Representative: Mohun, Stephen John

(57) **Abstract**

A system and method for cordless communication are provided. The system comprises a baseband module and a radio frequency module coupled to the baseband module. The system has a transmit state and a receive state. During the transmit state the baseband module combines a spreading code with a data signal to create spread data and provides the spread data to the radio frequency module. The radio frequency module generates a spread radio frequency signal with the spread data and provides the spread radio frequency signal to be transmitted. During the receive state the baseband module provides a spreading code to the radio frequency module. The radio frequency module receives a spread radio frequency signal and mixes the received spread radio frequency signal with the spreading code to create de-spread data.

## Description

The present invention relates in general to the field of cordless communication systems and, more particularly, to a system and method for cordless communication using radio frequency de-spreading.

Cordless or wireless communication systems are widely used to provide users with mobile communications. In general, the term "cordless" can refer to any form of airwave transmission using a set of radio frequencies. Conventional implementations of cordless systems, for example, include both public cordless systems and in-building cordless systems. In public systems, there are numerous service providers that allow users to make and receive calls virtually anywhere within a service area. Such service providers offer solutions based on a number of different technologies and standards. Typically, the service providers have purchased a license from the federal government (i.e., the Federal Communications Commission) to use a specific portion of the radio spectrum within specific markets.

In contrast to public systems, in-building cordless systems can avoid the cost of radio spectrum licenses by using unlicensed radio frequencies. In-building systems typically have a common configuration or topography in that there is a radio exchange that is adjunct to or integrated with a private branch exchange (PBX). Base stations (or fixed parts) are equipped with radio antennas that connect to the radio exchange. The base stations also transmit radio signals to and receive radio signals from cordless handsets (portable parts) with an unlimited range.

Cordless systems using unlicensed frequencies, and to a lesser extent cordless systems using spectrum licenses, have a need to avoid interference of the radio wave transmitted signal. Such interference can come from numerous sources, such as microwaves, other cordless communications systems, among others. Conventional wireless communication systems use spread spectrum technology to avoid such interference. Spread spectrum technology is generally a means to convert a narrow band information signal into a wider signal bandwidth. Conventional systems can use either a frequency hopping scheme or direct sequence spreading in order achieve a spread spectrum.

Conventional systems use direct sequence spreading by locally generating a pseudo-noise code and encoding digital data with this noise code. This can be referred to as "baseband processing" of the system. The digital data is then translated to a radio frequency signal and transmitted. This functionality can be referred to as radio frequency (RF) processing. The RF signal is then received by the target device and translated to digital data by the RF component of the target device. The digital data is decoded by the baseband component of the target device in the digital domain, using the same pseudo-noise code.

Such conventional designs can be disadvantageous because the designs are not conducive to integration between the RF component and the baseband component. Additionally, such systems can be prohibitively expensive.

The invention is defined in the independent claims, to which reference should now be made. Further, advantageous embodiments are found in the dependent claims.

In accordance with the present invention, a system and method for cordless communication using radio frequency de-spreading are disclosed that provide significant advantages over prior developed cordless systems.

According to one aspect of the present invention, a system for cordless communication comprises a baseband module and a radio frequency module coupled to the baseband module. The system has a transmit state and a receive state. In the transmit state, the baseband module combines a spreading code with a data signal to create spread data and provides the spread data to the radio frequency module. The radio frequency module then generates a spread radio frequency signal with the spread data and provides the spread radio frequency signal to be transmitted. In the receive state, the baseband module provides a spreading code to the radio frequency module, and the radio frequency module receives a spread radio frequency signal. The radio frequency module then mixes the spreading code with the spread radio frequency signal to create de-spread data from the spread radio frequency signal.

According to another aspect of the invention, a method for cordless communication is provided. The method comprises generating a spreading code and determining a receive state or a transmit state. If in the transmit state, the spreading code is combined with a data signal to create spread data. The data is transformed into a spread radio frequency signal and the spread radio frequency signal is transmitted. In the receive state, a spread radio frequency signal is received. The spread radio frequency signal is mixed with spreading code to create de-spread data.

It is a technical advantage of the present invention that it allows for maximum integration of the radio frequency module and the baseband module. This, in turn, leads to a less expensive cordless system.

It is another technical advantage that a requirement for channel filtering is reduced over prior developed systems. As such, the channel filter can be integrated into an integrated circuit with the rest of the components of the radio frequency module. This integration leads to a further reduction of cost.

It is a further technical advantage of the present invention that image rejection is reduced because the image is spread as well as data.

It is an additional technical advantage of the invention that interference from other wireless communications can be reduced, because RF signals generated with a different spreading code will appear as further spread noise.

It is a technical advantage of the present invention that a lower requirement of channel filtering is needed to perform direct sequence spreading. An additional advantage is that this makes it possible to integrate channel filter into an integrated circuit which significantly reduces the cost of the system. An additional technical advantage is that the present system reduces the requirements for image rejection because the image will be spread.

Other technical advantages should be apparent to one of ordinary skill in the art in view of the specification, claims, and drawings.

A more complete understanding of the present invention and advantages thereof may be acquired by referring to the following description of an embodiment thereof taken in conjunction with the accompanying drawings, in which like reference numbers indicate like features, and wherein:
FIGURE 1 is a block diagram of one embodiment of a cordless telephone system using radio frequency de-spreading according to the present invention;
FIGURE 2 is a block diagram of one embodiment of a time division duplex structure;
FIGURE 3 is a block diagram of one embodiment of a system for cordless communication using radio frequency de-spreading according to the present invention; and
FIGURE 4 is a flow diagram of one embodiment of a method for cordless communication using radio frequency de-spreading according to the present invention.

### DETAILED DESCRIPTION OF THE INVENTION

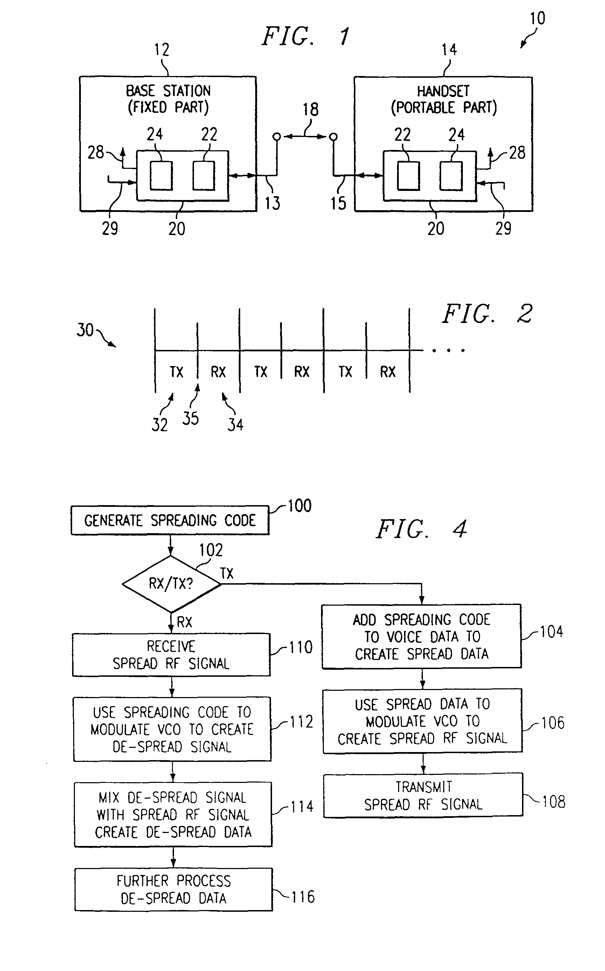

FIGURE 1 is a block diagram of a cordless telephone system using radio frequency (RF) de-spreading according to the present invention. Although referenced with respect to a digital telephone cordless system, those skilled in the art should recognize applicability to other wireless communication systems. For example, the current invention can have applicability to technology such as wireless wide-area networks (WAN) or local area networks (LAN).

In the embodiment of FIGURE 1, the digital cordless telephone system, indicated generally at 10, includes a base station 12 and handset 14. Base station 12 includes a system 20 which, in turn, comprises baseband module 24 and radio frequency (RF) module 22. Base station 12 further comprises antenna 13. Handset 14 comprises an antenna 15 coupled to system 20. System 20 of handset 14 comprises RF module 22 and baseband module 24.

In operation, handset 14 communicates with base station 12 via wireless communications 18. In order to do so, handset 14 receives voice data 29 which is provided to system 20. Baseband module 24 converts voice data 29 into digital data. Baseband module 24 further creates spread data by generating a spreading code and adding the spreading code to the digitized voice data. For example, baseband module 24 can use a chip sequence as the spreading code. The spread data is passed to RF module 22. RF module 22 then converts the spread data into a spread RF signal, and the RF signal is transmitted through antenna 15 as wireless communication 18.

Base station 12 receives the spread RF signal through wireless communication 18 via antenna 13 and passes the spread RF signal to system 20. RF module 22 receives the spread RF signal and mixes the signal down to create de-spread data. RF module uses a spreading code generated by baseband module 24 to mix the spread RF signal down and de-spread the data. For example, RF module 22 can use a chip sequence provided by baseband module 24. If the spreading code used by RF module 22 of base station 12 is the same spreading code used by handset 14 to generate the spread data, then the de-spread data will be comprehensible. If the spreading code differs, however, the spread RF signal will be further spread by the addition of the spreading code. After the data is de-spread, the data can be provided to baseband module 24 and to base station as voice data 28.

Further in operation, radio frequency communication 18 is a lower power, wider bandwidth signal than original voice data 28. Additionally, baseband module 24 of handset 14 and baseband module 24 of base station 12 can generate an identical spreading code. Thus, secured communications can be achieved between base station 12 and handset 14 which is relatively free from interference.

It is a technical advantage of the invention that interference from other wireless communications can be reduced, because RF signals generated with a different spreading code will appear as further spread noise.

FIGURE 2 is a block diagram of one embodiment of a time division duplex structure. In the embodiment of FIGURE 2, the time domain is broken down into multiple frames 30 having a fixed time width. Within each frame 30 are two subframes: a transmit frame 32, and a receive frame 34. A system operating according to the present invention can operate in a transmit mode during transmit frame 32 and a receive mode during receive time frame 34. A division 35 between the two frames is the point at which the system can transition from the transmit mode to the receive mode.

In one embodiment of the present invention, a repeating spreading code is generated that repeats twice per frame 30. The generating code would be identical during transmit frame 32 and receive frame 34. Further in operation, during transmit frame 32, the embodiment adds voice data to the spreading code in order to create spread data, which is then provided to the RF module (see FIGURE 1). During receive frame 34, the system provides the spreading code to mix down a received spread RF signal and create de-spread data.

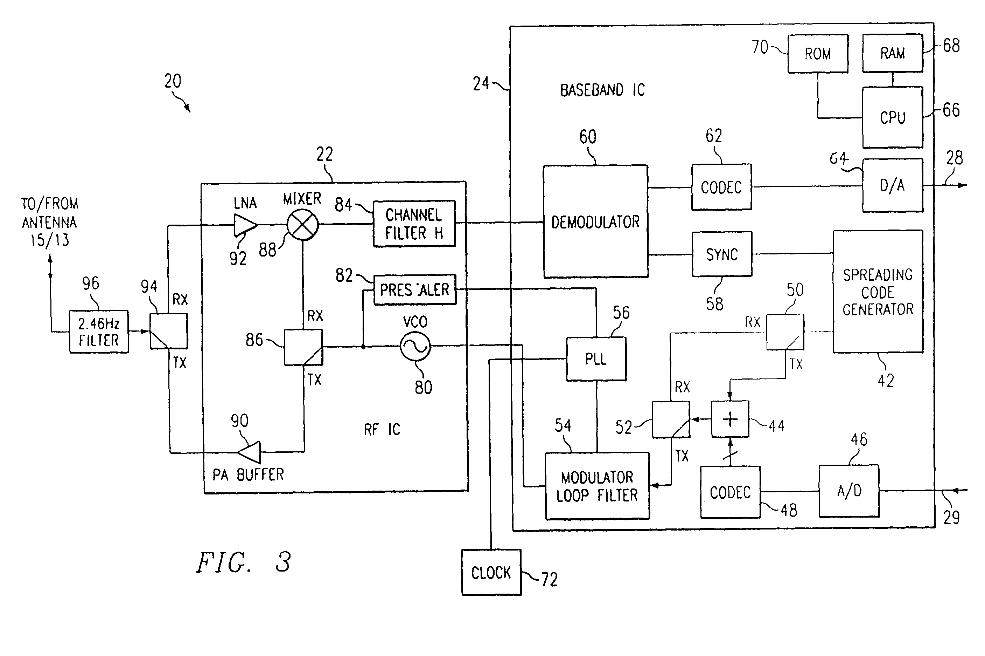

FIGURE 3 is a block diagram of one embodiment of a system for cordless communication using radio frequency de-spreading according to the present invention. A transceiver, indicated generally at 20, comprises RF module 22 and baseband module 24. In the embodiment of FIGURE 3, RF module 22 and baseband module 24 comprise separate integrated circuits (ICs). However, those skilled in the art should recognize that RF module 22 and baseband module 24 and any components incorporated therein, could comprise several ICs, or be combined into a single IC.

Baseband module 24 comprises a spreading code generator 42 which is coupled to an adder 44 through a switch 50. An analog to digital (A/D) converter 46 is coupled to a CODEC 48 which in turn is coupled to adder 44. An output of adder 44 is coupled to a switch 52 which, in turn, is coupled to a modulator loop filter 54. Modulator loop filter 54 further is coupled to a PLL 56. An external clock 72 couples to PLL 56. Spreading code generator 42 is further coupled to a sync module 58 which, in turn, is coupled to demodulator 60. Demodulator 60 is coupled to a CODEC 62, and CODEC 62 is coupled to a digital to analog (D/A) converter 64. Baseband module 24 further comprises a CPU 66 which is coupled to random access memory (RAM) 68 and read only memory (ROM) 70. The output of modulator loop filter 54, PLL 56, and demodulator 60, is coupled to RF module 22.

In the illustrated embodiment, RF module 22 comprises a voltage controlled oscillator (VCO) 80 which is coupled to modulated loop filter 54. A prescaler 82 is coupled to PLL 56. A channel filter 84 couples to demodulator 60. RF module further includes switch 86 which is coupled to VCO 80, prescaler 82, a mixer 88, and an PA buffer 90, as shown. A low noise amplifier (LNA) 92 is coupled to mixer 88. RF module 22 is coupled to a switch 94 which in turn couples to a high pass filter 96. High pass filter 96 is coupled to antenna 15/13 (see FIGURE 1).

In the embodiment of FIGURE 3, system 20 can operate in two states: a transmit state and a receive state. Further, the two states can correspond to the subframes as defined by FIGURE 2. In the transmit state, switches 50, 52, 86 and 94 are positioned as shown in FIGURE 3. In operation, during the transmit state, transceiver 20 receives voice data 29 and transmits a spread RF signal through antenna 15/13. In the receive state, transceiver 20 receives a spread RF signal from antenna 15/13 and transforms the RF signal into voice data 28.

In operation, during the transmit state, voice data 29 is received and converted into digital data by A/D converter 46. CODEC 48 codes the data and passes it on into adder 44. Additionally, spreading code generator 42 generates the spreading code for the spread spectrum signals. The spreading code could comprise, for example, a unique chip sequence. The spreading code from spreading code generator 42 is added to the digital data from CODEC 48 at adder 44 to create spread data. The spread data is communicated to modulated loop filter 54. Modulator loop filter 54 uses the spread data to modulate VCO 80 of RF module 22. Modulator loop filter 54 further uses the spread data to limit the bandwidth of the PLL control signal from PLL 56 which enters prescaler 82. The spread data from modulated loop filter 54 is used to frequency shift key (FSK) modulate VCO 80 and create a spread RF signal. The spread RF signal can then be a modulated FSK signal that is amplified by PA buffer 90, filtered through filter 96, and radiated by antenna 15/13.

In the receive state, switches 50, 52, 86 and 94 switch to the "RX" position, as shown in FIGURE 3. In operation, during the receive state, a spread RF signal is received by antenna 15/13 and passed through high pass filter 96. As switch 94 is in the RX position, the received spread RF signal passes to low noise amplifier (LNA) 92 and into mixer 88. The unmodified spreading code from spreading code generator 42 is passed to modulator loop filter 54, which in turn FSK modulates VCO 80 to create, in effect, a "de-spreading" code. The "de-spreading" code is passed to mixer 88 with the spread RF signal from LNA 92.

If the spreading code used to mix down the received spread RF signal is identical to the spreading code used to create the spread RF signal, the output of mixer 88 is de-spread data. This de-spread data is then filtered through channel filter 84 and into demodulator 60. From there, the de-spread data can be decoded by CODEC 62 and passed through D/A converter 64 as voice data 28. In contrast, if the two spreading codes are not identical, the received spread RF signal will be further spread at mixer 88. This further spread signal will be filtered by channel filter 84, and processing of the signal ends. In this way, the interference caused by other cordless communication systems can be reduced.

During both states, CPU 66, for example under the direction of instructions stored in ROM 77 and in conjunction with RM 68, can control operations of baseband module 24.

It is a technical advantage of the present invention that a lower requirement of channel filtering is needed to perform direct sequence spreading. An additional advantage is that this makes it possible to integrate channel filter into an integrated circuit which significantly reduces the cost of the system. An additional technical advantage is that the present system reduces the requirements for image rejection because the image will be spread.

FIGURE 4 is a flow diagram of one embodiment of a method for wireless communication using radio frequency de-spreading according to the present invention. At step 100, a spreading code is generated. At step 102, it is determined if the system is in a receive (RX) or transmit (TX) state. If in a transmit state, at step 104, the spreading code is added to voice data to create spread data. At step 106, the spread data is used to modulate a voltage controlled oscillator (VCO) to create a spread RF signal. At step 108, the spread RF signal is transmitted.

If the system is in a transmit state at step 102, a spread RF signal is received at step 110. At step 112, the spreading code generated at step 100 is used to modulate a VCO to create a de-spread signal. For example, the received RF signal can be mixed with the output of the modulated VCO. At step 114, the de-spread signal is mixed with the spread RF signal to create de-spread data. At step 116, the de-spread data is further processed.

Although the present invention has been described in detail, it should be understood that various changes, substitutions and alterations can be made thereto without departing from the scope of the invention as defined by the appended claims.

## Claims

1. A system (10) for cordless communication, comprising:
a baseband module (24); and
a radio frequency module (22) coupled to the baseband module;
the system having a transmit state and a receive state,
the baseband module (24) combining a spreading code with a data signal (29) to create spread data and for providing the spread data to the radio frequency module (22) in the transmit state; and
the radio frequency module (22) generating a spread radio frequency signal with the spread data and providing the spread radio frequency signal to be transmitted in the transmit state; and
the baseband module (24) providing a spreading code to the radio frequency module (22) in the receive state; and
the radio frequency module (22) receiving a spread radio frequency signal, and for mixing the spreading code with the received spread radio frequency signal to create de-spread data (28) in the receive state.

2. A system according to Claim 1, wherein the transmit state and the receive state are repeated in a time division duplex structure.

3. A system according to Claim 1 or 2, wherein the baseband module and the radio frequency module comprise separate integrated circuits.

4. A system according to any one of Claims 1 to 3, wherein the spreading code comprises a unique chip sequence.

5. A system according to any of Claims 1, 2 or 4, wherein the baseband module (24) and the radio frequency module (22) comprise a single integrated circuit.

6. A system according to any preceding Claim, wherein the baseband module (24) comprises a spreading code generator coupled to a modulator loop filter (54), and wherein the radio frequency module (22) comprises a voltage controlled oscillator (80) coupled to the modulator loop filter.

7. A system according to claim 6 wherein,
in the transmit state:
the modulator loop filter(54) of the baseband module uses the spread data to modulate the voltage controlled oscillator (80); and
the voltage controlled oscillator of the radio frequency module generates a spread radio frequency signal with the spread data and provides the spread radio frequency signal to be transmitted; and
in the receive state:
the baseband module (24) provides the spreading code to the modulator loop filter (59);
the modulator loop filter (54) uses the spreading code to modulate the voltage controlled oscillator;
and
an output of the voltage controlled oscillator (80) is mixed with the received spread radio frequency signal to create de-spread data.

8. A system according to any preceding Claim, wherein the radio frequency module operates in the 2.4 GHz ISM frequency band.

9. A system according to any preceding Claim, wherein the spread radio frequency signal comprises a frequency shift keyed spread spectrum signal.

10. A method of operation for a system (10) for cordless communication, comprising:
generating a spreading code;
if in a transmit state:
combining the spreading code with a data signal to create spread data;
transforming the spread data into a spread radio frequency signal; and
transmitting the spread radio frequency signal; and
if in a receive state:
receiving a spread radio frequency signal; and
mixing the spreading code with the received spread radio frequency signal to create de-spread data.

11. A method according to Claim 10, further comprising repeating the transmit state and the receive state in a time division duplex structure.

12. A method according to Claim 10 or 11, wherein generating the spreading code comprises deriving the spreading code from a unique chip sequence.

13. A method according to any preceding method Claim, further comprising operating in a 2.4 GHz ISM frequency band.

14. A method according to any preceding method Claim, wherein the spread radio frequency signal comprises a frequency shift keyed spread spectrum signal.
